# EUROPÄISCHE PATENTSCHRIFT

(11) **EP 0 749 878 B1**
(45) Veröffentlichungstag und Bekanntmachung des Hinweises auf die Patenterteilung: **06.09.2000**
(21) Anmeldenummer: 96810350.7
(22) Anmeldetag: 31.05.1996
(51) Int. Cl.: B61C 15/08, B60L 3/10, B60T 8/00

(54) **Fahrzeug-Leitsystem**
Vehicle control system
Système de contrôle pour véhicule

(30) Priorität: 24.06.1995 DE 19522993
(43) Veröffentlichungstag der Anmeldung: 27.12.1996
(73) Patentinhaber: DaimlerChrysler AG, 70567 Stuttgart (DE)
(72) Erfinder: Geradts, Karlheinz, 5303 Würenlingen (CH)

(56) Entgegenhaltungen:
- EP-A- 0 467 112
- ZEITSCHRIFT FÜR EISENBAHNWESEN UND VERKEHRSTECHNIK, Bd. 114, Nr. 11/12, November 1990 - Dezember 1990, BERLIN, DE, Seiten 512-518, XP000201119

## Beschreibung

### Technisches Gebiet

Die Erfindung bezieht sich auf das Gebiet der Leittechnik. Sie geht aus von einem Leitsystem für Fahrzeuge gemäss dem Oberbegriff des ersten Anspruchs. Ein solches Leitsystem kann insbesondere für die Steuerung und Regelung von schienengebundenen Fahrzeugen, insbesondere für Lokomotiven, eingesetzt werden.

### Stand der Technik

Ein gattungsgemässes Leitsystem wird im dritten Teil ("Multifunction Vehicle Bus") des Normierungsvorschlages IEC 9 332 für ein Zugdatennetz, Version 1.8, Oktober 1994 beschrieben. Es handelt sich dabei um ein Leitsystem, welches Daten zwischen verschiedenen Rechnern über einen sogenannten Multifunktions-Fahrzeugbus (Multifunction Vehicle Bus) austauscht. Der Datenaustausch auf dem Bus wird von einem oder mehreren Busverwaltern koordiniert. Die Datenübertragung erfolgt asynchron, dass heisst jeder Rechner oder Busverwalter verfügt über einen eigenen Taktgeber (Clock). Durch diese Asynchronität kann es sich ergeben, dass ein Rechner im Zeitpunkt des Eintreffens von neuen Daten gerade nicht bereit ist, diese zu empfangen und abzuarbeiten. Der Busverwalter versendet während eines sogenannten Buszyklus eine Reihe von Datenprotokollen. Die Übertragungsreihenfolge der Datenprotokolle wird vom Busverwalter festgelegt. Dadurch kann es geschehen, dass die Reihenfolge z.B. zweier Datenprotokolle vertauscht wird, und die betroffenen Rechner die Daten erst dem nächsten Buszyklus entnehmen können. Aufgrund dieser beiden durch die Asynchronität bedingten Umstände entstehen Totzeiten in der Bearbeitung. Im Normalfall stört dies nicht allzu sehr, da in den meisten Fällen lediglich Steuerungsaufgaben abgearbeitet werden müssen, bei welchen es keine Rolle spielt, ob die Daten unmittelbar bearheitet werden oder nicht. Bei Daten, welche für den Betrieb des Fahrzeuges von Wichtigkeit sind können die Totzeiten jedoch nachteilige Folgen haben. So sind z.B, auch das Stromrichterleitgerät (SLG) und der Anstriebsstromrichterkontroller (ASC) einer Lokomotive über diesen Bus miteinander verbunden, und die Daten für die Adhäsionsregelung werden vom ASC über den Bus an das SLG gesendet und dort bearbeitet. Bei einer Rechenzeit von einigen Millisekunden und einem Buszyklus von z.B. 16 ms können aufgrund der Asynchronität der beiden Geräte bei der Berechnung der Adhäsionsregeldaten Totzeiten und Schwankungen bis zu 30 ms auftreten. Dadurch reagiert die Regelung unter Umständen zu spät auf veränderte Adhäsionsbedingungen. Dies wirkt sich negativ auf die Fahrqualität und die Leistungsfähigkeit der Lokomotive aus. Auf nasser Schiene kann sogar eine Anfahrt an einer Steigung mit einer schweren Last scheitern.

### Darstellung der Erfindung

Aufgabe der vorliegenden Erfindung ist es, ein Leitsystem anzugeben, bei welchem solche Totzeiten und damit auch die negativen Einflüsse auf den Betrieb eines Fahrzeuges vermieden werden können.

Diese Aufgabe wird bei einem Leitsystem der eingangs genannten Art durch die Merkmale des ersten Anspruchs gelöst.

Kern der Erfindung ist es also, dass diejenige Datenprotokolle, welche für den Betrieb des Fahrzeuges von Bedeutung sind, untereinander mit einem definierten Zeitversatz versehen werden und dass diese bestimmten Datenprotokolle in den Rechner, für die sie bestimmt sind, einen Interrupt auslösen.

Durch den Interrupt wird es möglich, dass die Datenprotokolle unmittelbar abgearbeitet werden. Der Zeitversatz ermöglicht eine Synchronisation zwischen den beteiligten Rechnern und gewährleistet, dass die benötigten Datenprotokolle in der richtigen Reihenfolge auftreten. Auf diese Weise werden die störenden Totzeiten wirksam vermieden.

In einem realisierten Ausführungsbeispiel stellen die bestimmten Datenprotokolle einen Sollwert, welcher von einem ersten Rechner zu einem zweiten Rechner gesendet wird, und einen Istwert, welcher vom ersten Rechner zum zweiten Rechner gesendet wird, dar. Mit besonderem Vorteil wird die Erfindung für die Adhäsionsregelung einer Lokomotive eingesetzt. In diesem Fall gibt z.B. ein Antriebsleitgerät einen Zug- oder Bremskraftsollwert vor, welcher in einem Antriebkontrollgerät eingestellt wird. Dadurch stellt sich ein Zug- oder Bremskraftistwert ein. Dieser wird an das Antriebsleitgerät übermittelt, wo er zur Berechnung eines neuen Sollwertes dient. Dieser wird anschliessend wiederum dem Antriebskontrollgerät zugeleitet, und der oben geschilderte Prozess läuft von neuem ab. Mit dem erfindungsgemässen System konnten die Adhäsionseigenschaften einer elektrischen Lokomotive drastisch verbessert werden.

Weitere Ausführungsbeispiele ergeben sich aus den entsprechenden abhängigen Ansprüchen.

### Kurze Beschreibung der Zeichnungen

Nachfolgend wird die Erfindung anhand von Ausführungsbeispielen im Zusammenhang mit den Zeichnungen näher erläutert.

Es zeigen:
- **Fig. 1**: Eine schematische Darstellung eines erfindungsgemässen Leitsystems;
- **Fig. 2**: Einen Ausschnitt des erfindungsgemässen Leitsystems mit zwei miteinander kommunizierenden Rechnern;
- **Fig. 3**: Ein Zeitdiagramm mit zwei verschiedenen Datenprotokollen.

Die in den Zeichnungen verwendeten Bezugszeichen und deren Bedeutung sind in der Bezeichnungsliste zusammengefasst aufgelistet. Grundsätzlich sind in den Figuren gleiche Teile mit gleichen Bezugszeichen versehen.

### Wege zur Ausführung der Erfindung

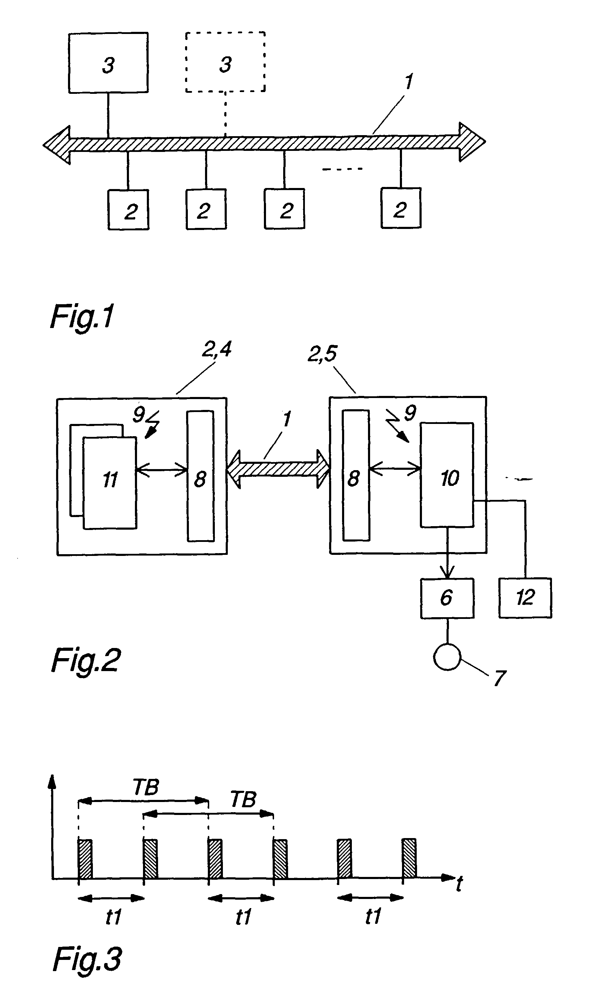

Figur 1 zeigt ein Schema eines erfindungsgemässen Leitsystems. Mit 1 ist ein Bus bezeichnet, an welchen ein Anzahl von Rechnern 2 und mindestens ein Busverwalter 3 angeschlossen ist. Die Rechner 2 tauschen untereinander über den Bus Daten und Adressen aus. Der Datenaustausch wird dabei von dem oder den Busverwaltern 3 koordiniert.

Die Datenprotokolle werden zyklisch mit einer Buszykluszeit TB versendet. Die Reihenfolge bzw. die zeitliche Abfolge verschiedener Datenprotokolle ist vom Busverwalter frei wählbar, so dass die Reihenfolge der Datenprotokolle unter Umständen gerade vertauscht oder der zeitliche Abstand zwischen den Datenprotokollen zu gering oder zu gross ist. Weitere Informationen über die Definition der Datenprotokolle etc. können dem eingangs genannten Normierungsvorschlag entnommen werden. Der Inhalt dieses Dokuments soll deshalb in Zusammenhang mit dieser Beschreibung mit berücksichtigt werden.

Jeder Rechner 2 und jeder Busverwalter 3 arbeitet asynchron, d.h. sie besitzen ihren eigenen Taktgeber (Clock). Figur 2 zeigt beispielhaft zwei Rechner 2, welche über den Bus 1 verbunden sind. Es handelt sich einerseits um ein Antriebsleitgerät 4 und ein Antriebskontrollgerät 5 z.B. einer elektrischen Lokomotive. Im Antriebsleitgerät 4 ist ein Adhäsionsregler 11 und im Antriebskontrollgerät 5 ein Antriebsregler 10 vorgesehen. Der Antriebsregler 10 ist mit einem Antriebsstromrichter 6 verbunden und steuert diesen an. Der Stromrichter 6 treibt einen Motor 7 an. Ausserdem ist eine Drehzahlerfassung 12 vorgesehen, welche einen Drehzahlistwert der Räder des Fahrzeuges misst. Dies kann beispielsweise mittels eines bekannten Wiegand-Sensors erfolgen. Der Drehzahlistwert und ein Zug- oder Bremskraftistwert wird nun vom Antriebskontrollgerät 5 über den Bus 1 an das Antriebsleitgerät 4 übermittelt. Im Adhäsionsregler 11 wird dort aus diesen Daten eine neuer Zug- oder Bremskraftsollwert berechnet. Dieser wird anschliessend an das Antriebskontrollgerät 5 übermittelt und eingestellt. Ein neuer Istwert stellt sich ein, und die Regelschleife wird von neuem durchlaufen.

Bei einem System nach dem Stand der Technik kann nun der Fall auftreten, dass z.B. das Antriebsleitgerät 4 im Moment der Ankunft der Daten vom Antriebskontrollgerät 5 nicht bereit zur Aufnahme der Daten ist. Dies spielt bei weniger relevanten Daten keine grosse Rolle, denn der Busverwalter versendet die Daten periodisch mit einer Buszykluszeit TB. Das Antriebsleitgerät 4 kann die Daten also beim nächsten Buszyklus abholen. Dadurch entstehen aber die eingangs erwähnten Totzeiten, welche für Daten, welche z.B. ausschliesslich der Steuerung dienen und daher nicht zeitkritisch sind, keinen grossen Einfluss spielen. Die Totzeiten können ebenfalls durch die beliebige und nur vom Busverwalter autonom bestimmte Reihenfolge der Datenprotokolle innerhalb eines Buszyklus entstehen. So kann beispielsweise die Reihenfolge der Soll- und Istwerte vertauscht sein.

Zug- und/oder Bremskraft-Soll- und Istwerte sind aber für den Betrieb der Lokomotive von grundsätzlicher Bedeutung, und die darauf angewiesene Adhäsionsregelung ebenso. Deshalb sollten diese Totzeiten tunlichst vermieden werden. Dies gilt insbesondere auch deshalb, weil die Adhäsionsregelung sehr rechenintensiv ist.

Die Totzeiten werden nach der Erfindung dadurch vermieden, dass die für den Betrieb des Fahrzeuges wichtigen Datenprotokolle - wie z.B. Drehzahlistwert, Zug- oder Bremskraft-Soll- und Istwerte - untereinander mit einem vorgebbaren Zeitversatz tl versehen werden (siehe Fig. 3). Dadurch wird die Reihenfolge und die zeitliche Abfolge der betroffenen Datenprotokolle festgelegt. Totzeiten durch Vertauschen der Reihenfolge bzw. durch unnötiges Warten auf die benötigten Daten können dadurch vermieden werden. In Figur 3 sind beispielhaft zwei verschiedene Datenprotokolle dargestellt, deren Zeitversatz innerhalb einer Busperiode TB t1 beträgt. Der Zeitversatz t1 kann beispielsweise gerade eine halbe Busperiode betragen, andere Werte sind selbstverständlich auch denkbar. Beim realisierten Ausführungsbeispiel betrug die Busperiode TB 16 ms, während für den Zeitversatz 8 ms gewählt wurden.

Eine unmittelbare Auswertung der Datenprotokolle wird ausserdem dadurch erreicht, dass die Datenprotokolle in den betroffenen Rechnern einen Interrupt auslösen. Dadurch wird ein verzugsfreies Abarbeiten der Datenprotokolle gewährleistet, und Totzeiten bedingt durch beschäftigte Rechner können vermieden werden. Zu diesem Zweck umfassen die Rechner einen Buffer 8, in welchen die Daten nach Ankunft zwischengespeichert werden können (siehe Fig. 2). Gleichzeitig wird ein Interrupt 9 ausgelöst, die Daten werden in den entsprechenden Regler 10 oder 11 geladen und nachfolgend abgearbeitet.

Mit dem erfindungsgemässen System gelang es, die Reaktionszeit der Adhäsionsregelung konstant auf weniger als 20 ms einzustellen. Beim Stand der Technik schwankte die Reaktionszeit zwischen 63 ms und ca. 21 ms. Als Folge dieser konstanten und gegenüber dem Stand der Technik auch verringerten Reaktionszeit konnte eine erhebliche Verbesserung des Adhäsionsverhaltens einer elektrischen Lokomotive erreicht werden.

### Bezeichnungsliste

- 1: Bus
- 2: Rechner
- 3: Busverwalter
- 4: Antriebsleitgerät
- 5: Antriebskontrollgerät
- 6: Antriebsstromrichter
- 7: Motor
- 8: Buffer
- 9: Interrupt
- 10: Antriebsregler
- 11: Adhäsionsregler
- 12: Drehzahlerfassung

## Patentansprüche

1. Leitsystem für Fahrzeuge, insbesondere für schienengebundene Fahrzeuge, insbesondere Lokomotiven, umfassend einen Bus (1), an welchen mindestens zwei Rechner (2) und mindestens ein Busverwalter (3) angeschlossen ist, wobei jeder Rechner (2) und jeder Busverwalter (3) asynchron voneinander arbeiten und jeder Busverwalter (3) das Versenden von Datenprotokolle, welche auf dem Bus (1) zwischen den Rechnern (2) zirkulieren, koordiniert, dadurch gekennzeichnet, dass der Busverwalter (3) bestimmte Datenprotokolle, welche zum Betrieb des Fahrzeuges von Wichtigkeit sind und von mindestens zwei Rechnern (2) benötigt werden, mit einem von aussen vorgebbaren Zeitversatz (t1) versieht und dass diese bestimmten Datenprotokolle in den Rechnern (2), für welche sie bestimmt sind, einen Interrupt (9) auslösen.

2. Leitsystem nach Anspruch 1, dadurch gekennzeichnet, dass die bestimmten Datenprotokolle einen Sollwert, welcher von einem ersten Rechner (2) zu einem zweiten Rechner (2) gesendet wird, und einen Istwert, welcher vom zweiten Rechner zum ersten gesendet wird, umfassen.

3. Leitsystem nach Anspruch 2, dadurch gekennzeichnet, dass es sich bei dem Soll- bzw. Istwert um Zug- und/oder Bremskraftwerte handelt und der erste Rechner Bestandteil eines Antriebsleitgeräts (4) und der zweite Rechner Bestandteil eines Antriebskontrollgerätes (5) ist.

4. Leitsystem nach Anspruch 3, dadurch gekennzeichnet, dass das Antriebsleitgerät (4) einen Zug- oder Bremskraftsollwert vorgibt, welcher im Antriebskontrollgerät (5) eingestellt wird und wodurch sich ein Zug- oder Bremskraftistwert einstellt, und dass dieser Zug- oder Bremskraftistwert vom Antriebskontrollgerät (4) an das Antriebsleitgerät (5) weitergeben wird, anhand dessen im Antriebsleitgerät (5) ein neuer Zug- oder Bremskraftsollwert berechnet wird.

5. Leitsystem nach Anspruch 4, dadurch gekennzeichnet, dass der Zeitversatz (t1) kleiner oder gleich einer ersten Zeitperiode, welche zum Einstellen des Zug- oder Bremskraftsollwertes benötigt wird, und kleiner gleich einer zweiten Zeitperiode, welche zur Berechnung neuer Zug- oder Bremskraftsollwerte benötigt wird, gewählt wird.

6. Leitsystem nach einem der Ansprüche 1 bis 5, dadurch gekennzeichnet, dass der oder jeder Busverwalter (3) die Datenprotokolle zyklisch mit einer Zeitperiode (TB) versendet und der Zeitversatz (t1) einer halben Zeitperiode (TB) entspricht.

## Claims

1. Control system for vehicles, in particular for rail-bound vehicles, in particular locomotives, comprising a bus (1) to which at least two computers (2) and at least one bus manager (3) is [sic] connected, each computer (2) and each bus manager (3) operating asynchronously from one another and each bus manager (3) coordinating the transmission of data protocols which circulate on the bus (1) between the computers (2), characterized in that the bus manager (3) provides specific data protocols, which are important for the operation of the vehicle and are required by at least two computers (2), with a chronological offset (t1) which can be prescribed from the outside, and in that these specific data protocols trigger an interrupt (9) in the computers (2) for which they are intended.

2. Control system according to Claim 1, characterized in that the specific data protocols comprise a desired value, which is transmitted from a first computer (2) to a second computer (2), and an actual value, which is transmitted from the second computer to the first.

3. Control system according to Claim 2, characterized in that the desired value and actual value are traction force values and/or braking force values and the first computer is a component of a drive control unit (4) and the second computer is a component of a drive supervision unit (5).

4. Control system according to Claim 3, characterized in that the drive control unit (4) prescribes a desired traction force value or desired braking force value which is set in the drive supervision unit (5), and as a result of which an actual traction force value or actual braking force value is set, and in that this actual traction force value or actual braking force value is passed on from the drive supervision unit (4) to the drive control unit (5) by means of which a new desired traction force value or desired braking force value is calculated in the drive control unit (5).

5. Control system according to Claim 4, characterized in that the chronological offset (t1) is selected to be less than or equal to a first time period which is required to set the desired traction force value or desired braking force value and is selected to be less than or equal to a second time period which is required to calculate new desired traction force values or desired braking force values.

6. Control system according to one of Claims 1 to 5, characterized in that the bus manager (3), or each bus manager (3), transmits the data protocols cyclically with a time period (TB), and the chronological offset (t1) corresponds to half a time period (TB).

## Revendications

1. Système de contrôle pour véhicules, en particulier pour des véhicules liés à des rails, en particulier des locomotives, comprenant un bus (1), auquel sont raccordés au moins deux calculateurs (2) et au moins un administrateur du bus (3), chaque calculateur (2) et chaque administrateur du bus (3) travaillant de manière asynchrone l'un par rapport à l'autre et chaque administrateur du bus (3) coordonnant l'émission de protocoles de données qui circulent sur le bus (1) entre les calculateurs (2), caractérisé en ce que l'administrateur du bus (3) assortit des protocoles de données définis importants pour le fonctionnement du véhicule et nécessaires à au moins deux calculateurs (2), d'un décalage temporel (t1) pouvant être prédéfini de l'extérieur et en ce que ces protocoles de données définis déclenchent une interruption (9) dans les calculateurs (2) auxquels ils sont destinés.

2. Système de contrôle selon la revendication 1, caractérisé en ce que les protocoles de données définis comportent une valeur de consigne qui est envoyée d'un premier calculateur (2) vers un second calculateur (2), et une valeur réelle qui est envoyée du second calculateur vers le premier.

3. Système de contrôle selon la revendication 2, caractérisé en ce que la valeur de consigne respectivement réelle correspond à une valeur de la force de traction et/ou de freinage, et en ce que le premier calculateur fait partie d'un équipement de contrôle de propulsion (4), et en ce que le second calculateur fait partie d'un équipement de commande de propulsion (5).

4. Système de contrôle selon la revendication 3, caractérisé en ce que l'équipement de contrôle de propulsion (4) fournit une valeur de consigne de la force de traction ou de freinage qui est réglée dans l'équipement de commande de propulsion (5) et qui permet le réglage d'une valeur réelle de la force de traction ou de freinage, et en ce que cette valeur réelle de la force de traction ou de freinage est transmise de l'équipement de contrôle de propulsion (4) vers l'équipement de commande de propulsion (5), ce qui permet de calculer, dans l'équipement de commande de propulsion (5), une nouvelle valeur de consigne de la force de traction ou de freinage.

5. Système de contrôle selon la revendication 4, caractérisé en ce que le décalage temporel (t1) est choisi inférieur ou égal à une première durée qui est nécessaire au réglage de la valeur de consigne de la force de traction ou de freinage, et inférieure ou égale à une seconde durée qui est nécessaire au calcul de nouvelles valeurs de consigne de la force de traction ou de freinage.

6. Système de contrôle selon l'une des revendications 1 à 5, caractérisé en ce que l'administrateur du bus (3) ou chaque administrateur du bus (3) émet les protocoles de données de manière cyclique avec une période (TB) et que le décalage temporel (t1) correspond à une demi-période (TB).
